# EUROPEAN PATENT SPECIFICATION

(11) **EP 4 369 431 B1**
(45) Date of publication and mention of the grant of the patent: **02.12.2026**
(21) Application number: 22881426.5
(22) Date of filing: 14.10.2022
(51) Int. Cl.: H01M 4/131, H01M 4/133, H01M 4/485, H01M 4/587, H01M 4/62, H01M 10/42, H01M 10/052, H01M 4/02, H01M 4/36, H01M 4/38, H01M 4/48

(54) **NEGATIVE ELECTRODE AND SECONDARY BATTERY INCLUDING SAME**
NEGATIVELEKTRODE UND SEKUNDÄRBATTERIE DAMIT
ÉLECTRODE NÉGATIVE ET BATTERIE SECONDAIRE LA COMPRENANT

(30) Priority: 15.10.2021 KR 20210137834
(43) Date of publication of application: 15.05.2024
(73) Proprietor: LG Energy Solution, Ltd., Seoul 07335 (KR)
(72) Inventor: LEE, Chang-Ju, Daejeon 34122 (KR); LIM, Ga-Hyun, Daejeon 34122 (KR); MOON, Il-Jae, Daejeon 34122 (KR); WOO, Sang-Wook, Daejeon 34122 (KR); LEE, Yong-Ju, Daejeon 34122 (KR); KIM, Dong-Myung, Daejeon 34122 (KR); KIM, Je-Young, Daejeon 34122 (KR)
(74) Representative: Hoffmann Eitle
(86) International application number: PCT/KR2022/015661
(87) International publication number: WO 2023/063799

(56) References cited:
- JP-A- 2013 077 391
- JP-A- 2013 077 391
- JP-A- 2014 154 317
- KR-A- 20140 019 054
- KR-A- 20160 109 665
- KR-A- 20160 109 665
- KR-A- 20200 028 258
- KR-A- 20200 038 168

## Description

### TECHNICAL FIELD

The present disclosure relates to a negative electrode and a secondary battery including the same.

The present application claims priority to Korean Patent Application No. 10-2021-0137834 filed on October 15, 2021 in the Republic of Korea.

### BACKGROUND ART

With the technological development and increasing demand of mobile devices, demand for secondary batteries as energy sources is increasing rapidly and, accordingly, many researches are being conducted on batteries that can satisfy various needs. Among them, the development of lithium secondary batteries as rechargeable secondary batteries having high energy density is at the center of attention. Recently, safety is drawing a lot of attentions in the development of secondary batteries.

The lithium secondary battery has a structure wherein an electrolyte including a lithium salt is impregnated in an electrode assembly including a positive electrode and a negative electrode, which are electrodes with active materials coated on electrode current collectors, and a porous separator disposed between the positive electrode and the negative electrode.

Lithium ions released from the positive electrode active material during the first charging of the lithium secondary battery are intercalated into the negative electrode active material and they are deintercalated during discharging. Energy is delivered as the lithium ions migrate between the two electrodes through this charge-discharge process. The negative electrode active material affects the basic performance characteristics of the lithium secondary battery. Because the improvement of the electrical conductivity of the negative electrode active material is affected by a conducting material, researches are being carried out on a negative electrode active material for improving the basic performance of the secondary battery.

The lithium secondary battery may explode or catch fire under abnormal operation conditions such as short circuit, overcharging beyond the allowed current and voltage, exposure to high temperature, impact caused by falling, etc. Therefore, many attempts are actively being made to improve the safety of lithium secondary batteries. However, because many researches focus on the separator to prevent the short circuit of the positive electrode and the negative electrode, there is a need on the research about the negative electrode active material for improving safety.

JP 2013-77391A provides a negative electrode for a lithium-ion secondary battery including a first layer, which contains carbon as the active material, formed on a negative electrode collector and a second layer, which contains a metal oxide capable of absorbing and desorbing lithium ions as active material, formed on the first layer.

KR 10-2016-0109665 relates to a lithium secondary battery using lithium titanium oxide (LTO) as a negative electrode active material.

### DISCLOSURE

### Technical Problem

The present disclosure is directed to providing a negative electrode with improved safety and a secondary battery including the same.

It will be easily understood that the objects and advantages of the present disclosure may be realized by the means shown in the appended claims and combinations thereof.

### Technical Solution

The inventors of the present disclosure have found out that the above-described technical problem can be solved by the electrode and a secondary battery including the same as set out in the appended claims.

The negative electrode includes a current collector; and a plurality of negative electrode active material layers provided on at least one side of the current collector, wherein
the plurality of negative electrode active material layers include a first negative electrode active material layer including lithium titanium oxide (LTO) and carbon nanotube (CNT) and one or more second negative electrode active material layer including a negative electrode active material other than the lithium titanium oxide (LTO),
the first negative electrode active material layer is in contact with the current collector or is located between the two or more second negative electrode active material layers,
the thickness of the first negative electrode active material layer is 0.5-4.6 % of the thickness of the total negative electrode active material layers, and
the loading amount of the first negative electrode active material layer is 0.01-0.1 mAh/cm².

The secondary battery includes a positive electrode, the above negative electrode and a separator disposed between the positive electrode and the negative electrode.

### Advantageous Effects

A negative electrode of the present disclosure may improve safety against external short circuit by increasing resistance in a battery. Specifically, according to the negative electrode of the present disclosure, the resistance in the battery is increased during discharging because of decreased electrical conductivity and, as a result, the amount of current generated immediately after external short circuit is decreased. Accordingly, the heat generation of the secondary battery can be decreased and the safety against external short circuit can be improved.

According to an exemplary embodiment of the present disclosure, since lithium titanium oxide as an active material and carbon nanotube as a conducting material are included in a negative electrode active material layer, enough conductivity can be provided to the layer even with a very small amount of the active material. In particular, lithium titanium oxide does not affect the performance of the battery under a normal operation state. But, when short circuit occurs under a fully charged state, the electrical conductivity is decreased rapidly as deintercalation of Li ions occurs in the negative electrode active material layer including the lithium titanium oxide. As a result, the resistance in the negative electrode is increased and safety can be ensured since the external short circuit current is decreased.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. In the accompanying drawings, the shape, size, scale, proportion, etc. of elements may be exaggerated for clarity.

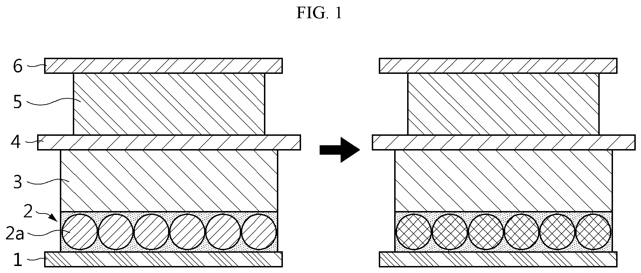

FIG. 1 shows the schematic cross-sectional views of a secondary battery including a negative electrode according to an exemplary embodiment of the present disclosure under a fully charged state and immediately after external short circuit.

### BEST MODE

Hereinafter, the present disclosure will be described in detail. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the present specification, when a part is described to "include" or "is equipped with" a certain element, it means that the part may further include or be equipped with other elements unless specifically stated otherwise.

In addition, the term "about" used throughout the present specification is intended to have meanings close to numerical values within an allowable error and intended to prevent accurate or absolute numerical values disclosed for understanding of the present disclosure from being unfairly used by an unconscionable third party.

Throughout the present specification, the description of "A and/or B" means "A, B, or A and B".

According to an aspect of the present disclosure, a negative electrode of the present disclosure includes:
a current collector; and
a plurality of negative electrode active material layers provided on at least one side of the current collector, wherein
the plurality of negative electrode active material layers include
a first negative electrode active material layer including lithium titanium oxide (LTO) and carbon nanotube (CNT) and
one or more second negative electrode active material layer including a negative electrode active material other than the lithium titanium oxide (LTO),
the first negative electrode active material layer is in contact with the current collector or is located between the two or more second negative electrode active material layers,
the thickness of the first negative electrode active material layer is 0.5-4.6 % of the thickness of the total negative electrode active material layers, and
the loading amount of the first negative electrode active material layer is 0.01-0.1 mAh/cm².

FIG. 1 shows the schematic cross-sectional views of a secondary battery including the negative electrode according to an exemplary embodiment of the present disclosure. FIG. 1 shows the structure of a secondary battery under a fully charged state and in the early stage of short circuit.

Specifically, referring to FIG. 1, a first negative electrode active material layer 2, a second negative electrode active material layer 3, a separator 4, a positive electrode active material layer 5 and a positive electrode current collector 6 are formed sequentially on a negative electrode current collector 1, and the first negative electrode active material layer includes lithium titanium oxide (LTO) 2a.

The lithium titanium oxide does not affect the performance of the battery under a normal operation state. But, when short circuit occurs under a fully charged state, deintercalation of lithium ions occurs.

For example, the lithium titanium oxide 2a may exist as Li_{7/3}Ti_{5/3}O₄ under the fully charged state, and may exist as Li_{4/3}Ti_{5/3}O₄ in the early stage of short circuit due to deintercalation of lithium ions.

Because of the deintercalation of lithium ions, electrical conductivity is decreased rapidly in the negative electrode active material layer including the lithium titanium oxide and safety can be ensured as external short circuit current is decreased due to the increased resistance in the negative electrode.

**In** an exemplary embodiment of the present disclosure, the current collector is not particularly limited as long as it has conductivity without inducing chemical change in the battery. For example, copper, stainless steel, aluminum, nickel, titanium, calcined carbon, copper or stainless steel surface-treated with carbon, nickel, titanium, silver, etc., aluminum-cadmium alloy, etc. may be used. The current collector may have a thickness of 3-500 µm, although not being specially limited thereto.

**In** addition, the negative electrode active material layer formed on at least one side of the current collector has a multi-layered structure consisting of a plurality of layers, rather than a single-layered structure.

The plurality of negative electrode active material layers of the present disclosure include, at least, a first negative electrode active material layer including lithium titanium oxide (LTO) and carbon nanotube (CNT); and a second negative electrode active material layer including a negative electrode active material other than the lithium titanium oxide (LTO).

The first negative electrode active material layer may have a single-layered structure, and the second negative electrode active material layer may have a single-layered structure or a multi-layered structure consisting of a plurality of layers.

In an exemplary embodiment of the present disclosure, the first negative electrode active material layer may be in contact with the current collector. In this case, a stacking structure of current collector/first negative electrode active material layer (A)/second negative electrode active material layer (B) is possible.

Alternatively, the first negative electrode active material layer may be located between the second negative electrode active material layer consisting of a plurality of layers. In this case, a stacking structure of current collector/second negative electrode active material layer (B-1)/first negative electrode active material layer (A)/second negative electrode active material layer (B-2) is possible.

When the first negative electrode active material layer and the second negative electrode active material layer of the present disclosure have the stacking structure described above, they can improve safety against external short circuit, in particular, since they can act as insulating layers against current dissipated outward through the current collector.

In an exemplary embodiment of the present disclosure, the loading amount of first negative electrode active material layer is 0.01-0.1 mAh/cm².

In general, when lithium titanium oxide is included as a negative electrode active material, cell capacity may be decreased due to irreversible charging since operation voltage is high as compared to a carbon- and/or silicon-based material commonly used as a negative electrode active material. However, when the loading amount of first negative electrode active material layer satisfies the above ranges, the cell capacity and the basic performance of the negative electrode are maintained and electrical conductivity can be decreased and safety can be improved as the negative electrode active material layer functions as an insulating layer only when lithium ions are released rapidly due to external short circuit.

For example, when the negative electrode active material layer of the present disclosure includes the first negative electrode active material layer with the loading amount described above, the thickness of the first negative electrode active material layer is 4.6% or smaller, 0.5-4.6% according to the invention, or 2.4-4.6% of the thickness of the total negative electrode active material layers of the present disclosure.

In an exemplary embodiment of the present disclosure, the first negative electrode active material layer includes lithium titanium oxide (LTO) and carbon nanotube. Specifically, the first negative electrode active material layer includes lithium titanium oxide as a negative electrode active material and includes carbon nanotube as a conducting material. Although lithium titanium oxide has lower electrical conductivity than carbon-based material which is commonly used as a negative electrode active material, when it is used together with a specific conducting material, electrical conductivity in the first negative electrode active material layer can be improved to a level comparable to that of the carbon-based material and safety against external short circuit can be improved because the first negative electrode active material layer having low electrical conductivity functions as an insulating layer when external short circuit occurs.

For example, in the present disclosure, the first negative electrode active material layer may include lithium titanium oxide as the only negative electrode active material and may include carbon nanotube as the only conducting material.

In the present disclosure, the lithium titanium oxide (LTO) may be specifically represented by Chemical Formula 1.
[Chemical Formula 1]

LiₐTi_{b}O₄ (1)

In Chemical Formula 1, 0.5 ≤ a ≤ 3 and 1 ≤ b ≤ 2.5.

As specific examples, the lithium titanium oxide may be Li_{0.8}Ti_{2.2}O₄, Li_{2.67}Ti_{1.33}O₄, LiTi₂O₄, Li_{1.33}Ti_{1.67}O₄, Li_{1.14}Ti_{1.71}O₄, Li₂Ti₅O₁₂, Li₄Ti₅O₁₂, etc., although not being limited thereto.

The lithium titanium oxide may be in the form of primary particles or secondary particles formed from aggregation of a plurality of the primary particles. The lithium titanium oxide may have an average particle diameter (D₅₀) of about 0.1-3 µm. The average particle diameter (D₅₀) may mean the diameter at 50% in the cumulative distribution of particle numbers depending on particle diameter. The average particle diameter may be measured using the laser diffraction method. Specifically, after dispersing the powder to be measured in a dispersion medium, particle size distribution is determined by measuring the difference in diffraction patterns depending on particle size using a laser diffraction particle size analyzer (e.g., Microtrac S3500) when the particles pass through a laser beam.

According to a specific exemplary embodiment of the present disclosure, the content of the carbon nanotube may be 0.005-3 parts by weight, 0.005- 1 part by weight, 0.005-0.05 part by weight or 0.01-0.05 part by weight based on 100 parts by weight of the first negative electrode active material layer. When the content of the carbon nanotube satisfies the above-descried ranges, an electrical network can be formed enough in the first negative electrode active material layer.

Specifically, the carbon nanotube may include one or more of single-wall carbon nanotube and multi-wall carbon nanotube.

For example, the carbon nanotube may be included in the negative electrode active material layer by being pre-dispersed in the form of a dispersion containing a dispersant and/or a dispersion medium for easier dispersion in the negative electrode active material layer. When the carbon nanotube is pre-dispersed in the form of a dispersion, uniform conductivity may be provided. In addition, since the carbon nanotube is included at a very small amount, it is easy to add a specified amount. The dispersant and/or the dispersion medium are not particularly limited as long as they can disperse carbon nanotube. For example, the dispersant may be hydrogenated nitrile butadiene rubber (H-NBR), polyvinylpyrrolidone (PVP), carboxymethyl cellulose (CMC), etc., and the dispersion medium may be N-methyl-2-pyrrolidone (NMP), water, etc.

In the single-wall carbon nanotube, hexagonal lattices of six carbon atoms are connected to each other to form one tubular wall (graphite sheet). The single-wall carbon nanotube exhibits excellent electrical properties due to its one-dimensional structure, and exhibits various electrical properties depending on the chiral structure and diameter of the hexagonal honeycomb-shaped lattices. The multi-wall carbon nanotube consists of a plurality of single-wall carbon nanotubes.

The single-wall carbon nanotube may have an average diameter of 0.5-15 nm. According to an exemplary embodiment of the present disclosure, the single-wall carbon nanotube may have an average diameter of 1-10 nm, 1-5 nm or 1-2 nm. When the average diameter of the single-wall carbon nanotube satisfies these ranges, the electrical conductivity of the negative electrode may be maintained even when the single-wall carbon nanotube is included at a very low content. The single-wall carbon nanotube may have a BET specific surface area of 500-1,500 m²/g or 900-1,200 m²/g. Within this range, a dispersion of the conducting material with a desired solid content may be obtained. The BET specific surface area may be measured by the nitrogen adsorption BET method. The single-wall carbon nanotube may have an aspect ratio of 50-20,000, or the single-wall carbon nanotube may have a length of 5-100 µm or 5-50 µm. When the aspect ratio or the length satisfies these ranges, the single-wall carbon nanotube may be strongly adsorbed to the lithium titanium oxide in the negative electrode owing to its large specific surface area. The aspect ratio may be determined from the SEM of the single-wall carbon nanotube powder by averaging the aspect ratio of 15 single-wall carbon nanotubes with large aspect ratios and the aspect ratio of 15 single-wall carbon nanotubes with small aspect ratios.

The single-wall carbon nanotube is advantageous over the multi-wall carbon nanotube or double-wall carbon nanotube in that an electrical network can be formed even with a small amount because of long length (due to high aspect ratio) and large volume.

According to a specific exemplary embodiment of the present disclosure, when the carbon nanotube included in the first negative electrode active material layer is single-wall carbon nanotube, the content of the single-wall carbon nanotube may be 0.005-3 parts by weight, 0.005-1 part by weight, 0.005-0.05 part by weight or 0.01-0.03 part by weight, based on 100 parts by weight of the first negative electrode active material layer. When the content of the single-wall carbon nanotube satisfies these ranges, it is favorable in terms of the conservation of energy density since an electrical network can be formed in the negative electrode active material layer even with a very small amount.

In addition, according to a specific exemplary embodiment of the present disclosure, when the carbon nanotube included in the first negative electrode active material layer is multi-wall carbon nanotube, the multi-wall carbon nanotube may have an average diameter of 10-100 nm. In addition, the multi-wall carbon nanotube may be included in the same electrode layer at a larger content than the single-wall carbon nanotube because it has a smaller specific surface area.

In an exemplary embodiment of the present disclosure, the second negative electrode active material layer includes a negative electrode active material other than lithium titanium oxide (LTO).

The negative electrode active material included in the second negative electrode active material layer may be any commonly used negative electrode active material other than lithium titanium oxide. For example, a carbon-based active material, a silicon-based active material, etc., specifically one or more of artificial graphite, natural graphite, hard carbon, soft carbon, graphitized carbon fiber, graphitized mesocarbon microbead, petroleum coke, calcined resin, carbon fiber, pyrolytic carbon, Si, a silicon oxide represented by SiOₓ (0 < x ≤ 2) and lithium metal may be included, although not being limited thereto.

The artificial graphite is generally prepared by carbonizing a raw material such as coal tar, coal tar pitch, petroleum-based heavy oil, etc. at 2,500 °C or above, which is then subjected to graphitization and particle size adjustment such as pulverization or secondary particle formation for use as a negative electrode active material. The artificial graphite has a structure in which crystals are distributed randomly in particles, and has a rather pointed shape with low sphericity as compared to natural graphite. The artificial graphite includes MCMB (mesophase carbon microbead) and MPCF (mesophase pitch-based carbon fiber), which are commercially used frequently, artificial graphite graphitized into block type, artificial graphite graphitized into powder type, etc., and the artificial graphite may have a sphericity of 0.91 or lower, 0.6-0.91, or 0.7-0.9. In addition, the artificial graphite may have a particle diameter of 5-30 µm or 10-25 µm.

The natural graphite generally exists as plate-like aggregates before processing. The plate-like particles are post-processed into spheres having smooth surface by particle pulverization, re-assembly, etc. for use as an active material for preparation of an electrode. The natural graphite may have sphericity of 0.91-0.97, 0.93-0.97, or 0.94-0.96. The natural graphite may have a particle diameter of 5-30 µm or 10-25 µm.

The active material layer may include two or more active materials. In this case, the different active materials may be distributed near the current collector of the active material layer toward the surface direction. Alternatively, even the same active material may include two or more active materials with different average particle diameters or shapes. Of course, the active material layer may also include two or more different active materials having different shapes or average particle diameters.

In addition, the second negative electrode active material layer of the present disclosure may include a conducting material. The conducting material is not specially limited as long as it has conductivity without inducing chemical change in the battery. For example, graphite such as natural graphite, artificial graphite, etc.; carbon nanotube; carbon black such as acetylene black, Ketjen black, channel black, furnace black, lamp black, thermal black, etc.; conductive fiber such as carbon fiber, metal fiber, etc.; fluorocarbon; metal powder such as aluminum or nickel powder; conductive whisker such as zinc oxide, potassium titanate, etc.; conductive metal oxide such as titanium oxide, etc.; or conductive materials such as polyphenylene derivatives, etc. may be used.

In an exemplary embodiment of the present disclosure, the negative electrode active material layer and the second negative electrode active material layer may include a negative electrode active material, a conducting material and a binder polymer.

As the binder polymer, various binder polymers such as a polyvinylidene fluoride-hexafluoropropylene copolymer (PVDF-co-HFP), polyvinylidene fluoride, polyacrylonitrile, poly(methyl methacrylate), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, styrene-butadiene rubber (SBR), fluorine rubber, various copolymers, etc. may be used. In addition, some of the binder polymers may function as a thickener which improves the dispersion properties of the active material and the conducting material by increasing the viscosity of a slurry for an active material layer.

The secondary battery according to the present disclosure includes a positive electrode, a negative electrode and a separator disposed between the positive electrode and the negative electrode, wherein the negative electrode is the negative electrode according to an exemplary embodiment of the present disclosure described above.

**In** the present disclosure, the secondary battery may be a lithium secondary battery including a lithium metal secondary battery, a lithium-ion secondary battery, a lithium polymer secondary battery, a lithium-ion polymer secondary battery, etc.

According to a specific exemplary embodiment of the present disclosure, the positive electrode may be equipped with a positive electrode current collector and an active material layer located on at least one side of the positive electrode current collector.

**In** general, the positive electrode current collector may have a thickness of about 3-500 µm. The positive electrode current collector is not specially limited as long as it has conductivity without inducing chemical change in the battery. For example, stainless steel, aluminum, nickel, titanium, calcined carbon, aluminum or stainless steel surface-treated with carbon, nickel, titanium, silver, etc., or the like may be used. Fine grooves may be formed on the surface of the positive electrode current collector to improve adhesion to the positive electrode active material, and the positive electrode current collector may be in various forms such as film, sheet, foil, net, porous body, foam, nonwoven, etc.

**In** addition, the active material layer of the present disclosure may include an active material, a conducting material and a binder polymer. The active material may be a lithium-containing oxide, specifically a lithium-containing transition metal oxide, as a positive electrode active material. For example, the lithium-containing transition metal oxide may be one or more selected from a group consisting of Liₓ(NiₐCo_{b}Mnₑ)O₂ (0.5 < x < 1.3, 0 < a < 1, 0 < b < 1, 0 < c < 1, a + b + c = 1), LiₓFePO₄ (0.5 < x < 1.3), LixCoO₂ (0.5 < x < 1.3), LiₓNiO₂ (0.5 < x < 1.3), LiₓMₙO₂ (0.5 < x < 1.3), LiₓMn₂O₄ (0.5 < x < 1.3), LiₓNi_{1-y}Co_{y}O₂ (0.5 < x < 1.3, 0 < y < 1), LiₓCo_{1-y}Mn_{y}O₂ (0.5 < x < 1.3, 0 ≤ y < 1), LiₓNi_{1-y}Mn_{y}O₂ (0.5 < x < 1.3, 0 ≤ y < 1), Liₓ(NiₐCo_{b}Mn_{c})O₄ (0.5 < x < 1.3, 0 < a < 2, 0 < b < 2, 0 < c < 2, a + b + c = 2), LiₓMn_{2-z}Ni_{z}O₄ (0.5 < x < 1.3, 0 < z < 2), LiₓMn_{2-z}Co_{z}O₄ (0.5 < x < 1.3, 0 < z < 2) and LiₓCoPO₄ (0.5 < x < 1.3). The lithium-containing transition metal oxide may also be coated with a metal such as aluminum (Al), etc. or a metal oxide. In addition, a sulfide, a selenide, a halide, etc. may be used in addition to the lithium-containing transition metal oxide.

Usually, the conducting material is added in an amount of 1-50 wt% based on the total weight of the mixture including the positive electrode active material. The conducting material is not specially limited as long as it has conductivity without inducing chemical change in the battery. For example, graphite such as natural graphite, artificial graphite, etc.; carbon nanotube; carbon black such as acetylene black, Ketjen black, channel black, furnace black, lamp black, thermal black, etc.; conductive fiber such as carbon fiber, metal fiber, etc.; fluorocarbon; metal powder such as aluminum or nickel powder; conductive whisker such as zinc oxide, potassium titanate, etc.; conductive metal oxide such as titanium oxide, etc.; or conductive materials such as polyphenylene derivatives, etc. may be used.

In addition, the binder polymer is a component which helps binding of the active material to the conducting material, etc. and binding to the current collector, and is generally added in an amount of 0.5-50 wt% based on the total weight of a slurry including the positive electrode active material. As the binder, polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylenepropylene-diene-monoether (EPDM) polymer, sulfonated EPDM, styrene-butadiene rubber (SBR), fluorine rubber, various copolymers, etc. may be used.

The separator used in the present disclosure together with the electrodes is not specially limited. The separator is disposed between the positive electrode and the negative electrode and separates the positive electrode and the negative electrode. A thin insulating film with high ion permeability and mechanical strength is used. Any one that is commonly used as a separator in a secondary battery may be used without special limitation. Specifically, a porous polymer film, e.g., a porous polymer film prepared from a polyolefin-based polymer such as an ethylene homopolymer, a propylene homopolymer, an ethylene/butene copolymer, an ethylene/hexene copolymer, an ethylene/methacrylate copolymer, etc. or a stacked structure of two or more layers of the film may be used. In addition, a nonwoven fabric prepared from a common porous nonwoven, e.g. high-melting-point glass fiber, polyethylene terephthalate fiber, etc. may be used.

In addition, a separator coated with inorganic particles, a binder polymer, or a mixture of inorganic particle and a binder polymer may be used to ensure heat resistance or mechanical strength. The separator may have a single- or multi-layer structure. In addition, when a solid electrolyte such as a polymer, etc. is used as an electrolyte, the solid electrolyte may also function as the separator.

### MODE FOR DISCLOSURE

Hereinafter, the present disclosure will be described in detail through examples. However, the examples of the present disclosure can be changed into various other forms, and the scope of the present disclosure is not limited by the examples but as set out in the appended claims. The examples of the present disclosure are provided so that the present disclosure is described more completely understood by those having ordinary knowledge in the art.

### Examples

Negative electrodes and lithium secondary batteries of examples and comparative examples were prepared as follows.

### Example 1: Preparation of negative electrode and lithium secondary battery

### <Preparation of negative electrode>

A homogeneous first negative electrode active material slurry was obtained by dispersing 1.545 parts by weight of a binder polymer (polyvinylidene fluoride, PVDF) and a dispersant (polyvinylpyrrolidone, PVP), 0.01 part by weight of single-wall carbon nanotube (SWCNT) with an average diameter of 1 nm as a conducting material, and 98.445 parts by weight of lithium titanium oxide (Li₄Ti₅O₁₂, average particle diameter = 0.9 µm) as a negative electrode active material in N-methylpyrrolidone as a dispersion medium.

After coating the first negative electrode active material slurry on a copper current collector with a thickness of 15 µm, a first negative electrode active material layer was formed with a loading amount of 0.1 mAh/cm² by drying at 120 °C for 24 hours.

Then, a homogeneous second negative electrode active material slurry was obtained by dispersing 2.5 parts by weight of SBR and 1.2 parts by weight of CMC as binder polymers in distilled water as a solvent and then adding 0.5 part by weight of carbon black (Super C65) as a conducting material and 95.8 parts by weight of flake-type artificial graphite (maximum length = 9 µm, mean aspect ratio = 1:3.5) as a negative electrode active material. The second negative electrode active material slurry was coated on the first negative electrode active material layer with a loading amount of 3.6 mAh/cm². The weight ratio of the negative electrode active material in the first negative electrode active material layer and the negative electrode active material in the second negative electrode active material layer was controlled to be 5:95.

The thickness of the first negative electrode active material layer was 5.3 µm, and the thickness of the second negative electrode active material layer was 112 µm. The thickness of the first negative electrode active material layer was about 4.5% of the thickness of the total negative electrode active material layers.

### <Preparation of positive electrode>

A positive electrode active material slurry was prepared by adding Li(Ni_{0.6}Mn_{0.2}Co_{0.2})O₂ (NCM-622) as a positive electrode active material, carbon black as a conducting material and polyvinylidene fluoride (PVDF) as a binder polymer at a weight ratio of 96:2:2 to N-methylpyrrolidone (NMP) as a solvent. After coating the slurry on an aluminum current collector with a thickness of 15 µm, a positive electrode was prepared by conducting drying and rolling under the same condition as for the negative electrode. The loading amount of the positive electrode active material layer was 18.6 mg/cm² based on dry weight.

### <Preparation of lithium secondary battery>

An electrolyte was prepared by dissolving LiPF₆ in an organic solvent mixture of 3:7 (v/v) ethylene carbonate (EC), and ethyl methyl carbonate (EMC) to a concentration of 1.0 M and then dissolving 0.5 wt% of vinylene carbonate (VC) as an additive.

After disposing a porous polypropylene separator between the prepared negative electrode and positive electrode, a lithium secondary battery was prepared by injecting the electrolyte.

### Example 2

A negative electrode and a lithium secondary battery were prepared in the same manner as in Example 1, except that the stacking structure of the negative electrode was changed.

The negative electrode of Example 2 has a stacking structure of [current collector/second negative electrode active material layer (a)/first negative electrode active material layer/second negative electrode active material layer (b)]. The active material slurries were coated and dried such that the loading amount of the second negative electrode active material layer was 1.8 mAh/cm² and the loading amount of the first negative electrode active material layer was 0.1 mAh/cm². The thickness of the first negative electrode active material layer was 5.3 µm and the thickness of each of the second negative electrode active material layers (a) and (b) was 56 µm. The thickness of the first negative electrode active material layer was about 4.5% of the thickness of the total negative electrode active material layers.

### Example 3

A negative electrode and a lithium secondary battery were prepared in the same manner as in Example 1, except that 0.02 part by weight of single-wall carbon nanotube (SWCNT) with an average diameter of 1 nm and 98.435 parts by weight of lithium titanium oxide were included in the first negative electrode active material layer.

The loading amount of first negative electrode active material layer was 0.1 mAh/cm², the thickness of the first negative electrode active material layer was 5.4 µm and the thickness of the second negative electrode active material layer was 112 µm. The thickness of the first negative electrode active material layer was about 4.6% of the thickness of the total negative electrode active material layers.

### Example 4

A negative electrode and a lithium secondary battery were prepared in the same manner as in Example 1, except that 0.02 part by weight of single-wall carbon nanotube (SWCNT) with an average diameter of 2 nm, as a conducting material, and 98.435 parts by weight of lithium titanium oxide were included in the first negative electrode active material layer and the loading amount of first negative electrode active material layer was 0.05 mAh/cm².

The thickness of the first negative electrode active material layer was 2.7 µm and the thickness of the second negative electrode active material layer was 112 µm. The thickness of the first negative electrode active material layer was about 2.4% of the thickness of the total negative electrode active material layers.

### Comparative Example 1

After dispersing 2.5 parts by weight of SBR and 1.2 parts by weight of CMC as binders in distilled water as a solvent, a negative electrode active material slurry was obtained by adding 0.5 part by weight of carbon black (Super C65) as a conducting material and 95.8 parts by weight of flake-type artificial graphite (maximum length = 9 µm, mean aspect ratio = 1:3.5) as a negative electrode active material. A negative electrode with a loading amount of 3.6 mAh/cm² was formed by coating the negative electrode active material slurry on a copper current collector with a thickness of 15 µm and then drying at 120 °C for 24 hours. The thickness of the negative electrode active material layer was 112 µm.

A secondary battery was prepared in the same manner as in Example 1, except that the negative electrode prepared above was used.

### Comparative Example 2

A negative electrode and a secondary battery were prepared in the same manner as in Comparative Example 1, except that, unlike Comparative Example 1 wherein only artificial graphite was used as the negative electrode active material, the negative electrode active material included artificial graphite and lithium titanium oxide (Li₄Ti₅O₁₂, average particle diameter = 0.9 µm) at a weight ratio of 95:5, and the negative electrode was formed such that the loading amount of the negative electrode active material layer was 3.7 mAh/cm². The thickness of the negative electrode active material layer was 117 µm.

### Comparative Example 3

A negative electrode and a secondary battery were prepared in the same manner as in Example 1, except that the loading amount of the first negative electrode active material layer was 0.7 mAh/cm². The thickness of the first negative electrode active material layer was 37.1 µm and the the thickness of the second negative electrode active material layer was 112 µm. The thickness of the first negative electrode active material layer was about 25% of the thickness of the total negative electrode active material layers.

### Comparative Example 4

A negative electrode and a secondary battery were prepared in the same manner as in Example 1, except that the loading amount of the first negative electrode active material layer was 0.3 mAh/cm². The thickness of the first negative electrode active material layer was 15.9 µm and the thickness of the second negative electrode active material layer was 112 µm. The thickness of the first negative electrode active material layer was about 12% of the thickness of the total negative electrode active material layers.

### Comparative Example 5

A negative electrode and a secondary battery were prepared in the same manner as in Example 1, except that the loading amount of the first negative electrode active material layer was 0.008 mAh/cm². The thickness of the first negative electrode active material layer was 0.4 µm and the thickness of the second negative electrode active material layer was 112 µm. The thickness of the first negative electrode active material layer was about 0.4% of the thickness of the total negative electrode active material layers.

### Evaluation results

### Monocell capacity

A monocell was prepared by assembling each of the negative electrodes, the positive electrodes and the porous polypropylene separators prepared in the examples and comparative examples and then injecting an electrolyte. After wetting for 24 hours, followed by activation by charging to SOC 30% with a current of 0.1 C, 3 cycles of CC/CV mode 0.33 C and 4.2 V, 0.05 C cut-off charge, CC mode 0.33 C, 3.0 V cut-off discharge were conducted, and the third discharge capacity was measured. The measurement result is given in Table 1 and Table 2.

### External short circuit peak current (A)

After externally short-circuiting each of the secondary batteries of the examples and comparative examples, external short circuit peak current (A) was measured at 0.4-msec intervals under fully charged state using an oscilloscope (Wavesuffer 3024, Teledyne LeCroy) and a current probe (CP150, Teledyne LeCroy). The measurement result is given in Table 1 and Table 2.

### External short circuit peak current (C-rate)

External short circuit peak current (C-rate) was calculated using the measured monocell capacity and external short circuit peak current (A) values according to [Equation 1]. The calculation result is given in Table 1 and Table 2. [Equation 1] $1 / \left[C-rate\right] = Hour = monocell capacity / external short circuit peak current \left(A\right)$

**[Table 1]**

| | | Example 1 | Example 2 | Example 3 | Example 4 |
|---|---|---|---|---|---|
| First negative electrode active material layer | Loading amount (mAh/cm²⁾ | 0.1 | 0.1 | 0.1 | 0.05 |
| | Thickness (µm) | 5.3 | 5.3 | 5.4 | 2.7 |
| Second negative electrode active material layer | Loading amount (mAh/cm²⁾ | 3.6 | 3.6 | 3.6 | 3.6 |
| | Thickness (µm) | 112 | 56 (Second negative electrode active material layer a: 56, second negative electrode active material layer b: 56) | 112 | 112 |
| Thickness of the first negative electrode active material layer with respect to thickness of total negative electrode active material layers (%) | | 4.5 | 4.5 | 4.6 | 2.4 |
| Monocell capacity | | 38.6 | 38.6 | 38.8 | 39.1 |
| External short circuit peak current (A) | | 7.9 | 8.4 | 8.1 | 8.3 |
| External short circuit peak current (C-rate) | | 205 | 218 | 209 | 215 |

**[Table 2]**

| | | Comp. Ex. 1 | Comp. Ex. 2 | Comp. Ex. 3 | Comp. Ex. 4 | Comp. Ex. 5 |
|---|---|---|---|---|---|---|
| First negative electrode active material layer | Loading amount (mAh/cm²⁾ | - | - | 0.7 | 0.3 | 0.008 |
| | Thickness (µm) | - | - | 37.1 | 15.9 | 0.4 |
| Second negative electrode active material layer | Loading amount (mAh/cm²⁾ | 3.6 | 3.7 | 3.6 | 3.6 | 3.6 |
| | Thickness (µm) | 112 | 117 | 112 | 112 | 112 |
| Thickness of the first negative electrode active material layer with respect to thickness of total negative electrode active material layers (%) | | - | - | 25 | 12 | 0.4 |
| Monocell capacity | | 39.5 | 38.6 | 31.8 | 36.3 | 39.4 |
| External short circuit peak current (A) | | 9.1 | 9 | 6.1 | 7.3 | 8.9 |
| External short circuit peak current (C-rate) | | 230 | 233 | 192 | 201 | 226 |

As can be seen from Tables 1 and 2, Examples 1-4 showed improved safety against external short circuit with superior cell capacity and low external short circuit peak current as compared to Comparative Examples 1-5.

Comparative Examples 1, 2 and 5 showed good cell capacity but high external short circuit peak current (A) and external short circuit peak current (C-rate). Comparative Examples 3 and 4 showed safety against external short circuit but was disadvantageous in terms of cell capacity because the loading amount of the first negative electrode active material layer including lithium titanium oxide and carbon nanotube was higher as compared to Example 1.

### [Description of Main Elements]

1: negative electrode current collector
2: first negative electrode active material layer
2a: lithium titanium oxide
3: second negative electrode active material layer
4: separator
5: positive electrode active material layer
6: positive electrode current collector

## Claims

1. A negative electrode comprising:
a current collector; and
a plurality of negative electrode active material layers provided on at least one side of the current collector, wherein
the plurality of negative electrode active material layers comprise
a first negative electrode active material layer comprising lithium titanium oxide (LTO) and carbon nanotube (CNT) and
one or more second negative electrode active material layer comprising a negative electrode active material other than the lithium titanium oxide (LTO),
the first negative electrode active material layer is in contact with the current collector or is located between the two or more second negative electrode active material layers,
the thickness of the first negative electrode active material layer is 0.5-4.6 % of the thickness of the total negative electrode active material layers, and
the loading amount of the first negative electrode active material layer is 0.01-0.1 mAh/cm².

2. The negative electrode according to claim 1, wherein the content of the carbon nanotube is 0.005-3 parts by weight based on 100 parts by weight of the first negative electrode active material layer.

3. The negative electrode according to claim 1, wherein the carbon nanotube comprises one or more of single-wall carbon nanotube and multi-wall carbon nanotube.

4. The negative electrode according to claim 3, wherein
the carbon nanotube is single-wall carbon nanotube, and
the single-wall carbon nanotube has an average diameter of 0.5-15 nm.

5. The negative electrode according to claim 4, wherein the content of the single-wall carbon nanotube is 0.005-0.1 part by weight based on 100 parts by weight of the first negative electrode active material layer.

6. The negative electrode according to claim 1, wherein each of the one or more second negative electrode active material layer independently comprises one or more of graphite and a silicon-based compound.

7. A secondary battery comprising a positive electrode, a negative electrode and a separator disposed between the positive electrode and the negative electrode, wherein
the negative electrode is the negative electrode according to any one of claims 1 to 6.

8. The secondary battery according to claim 7, wherein the secondary battery is a lithium secondary battery.

## Patentansprüche

1. Negativelektrode, umfassend:
einen Stromkollektor; und
eine Vielzahl von Negativelektroden-Aktivmaterialschichten, die auf mindestens einer Seite des Stromkollektors bereitgestellt sind, wobei
die Vielzahl von Negativelektroden-Aktivmaterialschichten umfasst
eine erste Negativelektroden-Aktivmaterialschicht, umfassend Lithiumtitanoxid (LTO) und Kohlenstoffnanoröhre (CNT), und
eine oder mehrere zweite Negativelektroden-Aktivmaterialschichten, umfassend ein anderes Negativelektroden-Aktivmaterial als Lithiumtitanoxid (LTO),
die erste Negativelektroden-Aktivmaterialschicht in Kontakt mit dem Stromkollektor steht oder zwischen den zwei oder mehr zweiten Negativelektroden-Aktivmaterialschichten angeordnet ist,
die Dicke der ersten Negativelektroden-Aktivmaterialschicht 0,5-4,6 % der Dicke der gesamten Negativelektroden-Aktivmaterialschichten beträgt, und
die Beladungsmenge der ersten Negativelektroden-Aktivmaterialschicht 0,01-0,1 mAh/cm² beträgt.

2. Negativelektrode nach Anspruch 1, wobei der Gehalt der Kohlenstoffnanoröhre 0,005-3 Gewichtsteile, bezogen auf 100 Gewichtsteile der ersten Negativelektroden-Aktivmaterialschicht, beträgt.

3. Negativelektrode nach Anspruch 1, wobei die Kohlenstoffnanoröhre eine oder mehrere von einwandiger Kohlenstoffnanoröhre und mehrwandiger Kohlenstoffnanoröhre umfasst.

4. Negativelektrode nach Anspruch 3, wobei die Kohlenstoffnanoröhre eine einwandige Kohlenstoffnanoröhre ist, und die einwandige Kohlenstoffnanoröhre einen durchschnittlichen Durchmesser von 0,5-15 nm aufweist.

5. Negativelektrode nach Anspruch 4, wobei der Gehalt der einwandigen Kohlenstoffnanoröhre 0,005-0,1 Gewichtsteile, bezogen auf 100 Gewichtsteile der ersten Negativelektroden-Aktivmaterialschicht, beträgt.

6. Negativelektrode nach Anspruch 1, wobei jede der einen oder mehreren zweiten Negativelektroden-Aktivmaterialschichten unabhängig voneinander eine oder mehrere von Graphit und einer Verbindung auf Siliciumbasis umfasst.

7. Sekundärbatterie, umfassend eine Positiveelektrode, eine Negativelektrode und einen Separator, der zwischen der Positivelektrode und der Negativelektrode angeordnet ist, wobei
die Negativelektrode die Negativelektrode nach einem der Ansprüche 1 bis 6 ist.

8. Sekundärbatterie nach Anspruch 7, wobei die Sekundärbatterie eine Lithiumsekundärbatterie ist.

## Revendications

1. Électrode négative comprenant :
un collecteur de courant ; et
une pluralité de couches de matériau actif d'électrode négative disposées sur au moins un côté du collecteur de courant, dans laquelle
la pluralité de couches de matériau actif d'électrode négative comprend
une première couche de matériau actif d'électrode négative comprenant de l'oxyde de lithium-titane (LTO) et un nanotube de carbone (CNT) et
une ou plusieurs deuxièmes couches de matériau actif d'électrode négative comprenant un matériau actif d'électrode négative autre que l'oxyde de lithium-titane (LTO),
la première couche de matériau actif d'électrode négative est en contact avec le collecteur de courant ou est située entre les deux deuxièmes couches de matériau actif d'électrode négative ou plus,
l'épaisseur de la première couche de matériau actif d'électrode négative représente 0,5-4,6 % de l'épaisseur de la totalité des couches de matériau actif d'électrode négative, et
la quantité de chargement de la première couche de matériau actif d'électrode négative est de 0,01-0,1 mAh/cm².

2. Électrode négative selon la revendication 1, dans laquelle la teneur du nanotube de carbone est de 0,005-3 parties en poids sur la base de 100 parties en poids de la première couche de matériau actif d'électrode négative.

3. Électrode négative selon la revendication 1, dans laquelle le nanotube de carbone comprend un ou plusieurs parmi un nanotube de carbone à paroi simple et un nanotube de carbone à parois multiples.

4. Électrode négative selon la revendication 3, dans laquelle
le nanotube de carbone est un nanotube de carbone à paroi simple, et
le nanotube de carbone à paroi simple présente un diamètre moyen de 0,5-15 nm.

5. Électrode négative selon la revendication 4, dans laquelle la teneur du nanotube de carbone à paroi simple est de 0,005-0,1 partie en poids sur la base de 100 parties en poids de la première couche de matériau actif d'électrode négative.

6. Électrode négative selon la revendication 1, dans laquelle chacune de la ou des deuxièmes couches de matériau actif d'électrode négative comprend indépendamment un ou plusieurs parmi le graphite et un composé à base de silicium.

7. Batterie secondaire comprenant une électrode positive, une électrode négative et un séparateur disposé entre l'électrode positive et l'électrode négative, dans laquelle
l'électrode négative est l'électrode négative selon l'une quelconque des revendications 1 à 6.

8. Batterie secondaire selon la revendication 7, dans laquelle la batterie secondaire est une batterie secondaire au lithium.
